## Europäisches Patentamt

## European Patent Office

## Office européen des brevets

(19)

(11) Veröffentlichungsnummer: **0 068 381**
B1

(12) **EUROPÄISCHE PATENTSCHRIFT**

(45) Veröffentlichungstag der Patentschrift:
17.09.86

(51) Int. Cl.⁴: **A 01 B 3/26**, A 01 B 63/22

(21) Anmeldenummer: **82105420.2**

(22) Anmeldetag: **21.06.82**

(54) **Von einem Ackerschlepper nachgeschleppter Pflug.**

(30) Priorität: **22.06.81 US 275572**

(43) Veröffentlichungstag der Anmeldung:
**05.01.83 Patentblatt 83/1**

(45) Bekanntmachung des Hinweises auf die Patenterteilung:
**17.09.86 Patentblatt 86/38**

(84) Benannte Vertragsstaaten:
**DE FR GB SE**

(56) Entgegenhaltungen:
**US - A - 1 926 401**
**US - A - 3 236 313**
**US - A - 3 321 029**
**US - A - 3 481 407**
**US - A - 3 731 749**

(73) Patentinhaber: **DEERE & COMPANY, 1 John Deere Road, Moline Illinois 61265 (US)**

(72) Erfinder: **Arnold, Loren Glenn, RFD No. 2, Fort Jennings Ohio 45844 (US)**
Erfinder: **Parker, Paul David, 776 - 41st Avenue, East Moline Illinois 61244 (US)**
Erfinder: **Sullivan, James Franklin, 345 - 32nd Avenue, East Moline Illinois 61244 (US)**

(74) Vertreter: **Fricke, Joachim, Dr. et al, Dr. R. Döring, Dr. J. Fricke, Patentanwälte Josephspitalstrasse 7, D-8000 München 2 (DE)**

**Beschreibung**

Die Erfindung betrifft einen von einem Ackerschlepper nachgezogenen Pflug mit den Merkmalen des Oberbegriffs des Anspruchs 1.

Ein solcher Pflug ist aus der US-PS 3 731 749 bekannt. Bei diesem bekannten Pflug ist der Hauptrahmen auf drei Laufrädern abgestützt, so dass eine Steuerung der Höhenlage des Hauptrahmens nicht über eine verstellbare Zugvorrichtung erfolgt. Der bekannte Pflug benötigt drei Schubkolbenmotore und zur Verstellung des vorderen Furchenlaufrades zwischen der Anpflugstellung und der normalen Arbeitsstellung zusätzlich eine mittels Hand verstellbare Verstelleinrichtung. Diese umfasst als Verbindung zwischen dem Hauptrahmen und dem zur Verstellung des Furchenlaufrades dienenden, doppelt wirkenden Schubkolbenmotor eine Leerweg- und Verstelleinrichtung. Diese weist einen am Hauptrahmen zwischen zwei Anschlägen frei schwenkbaren Leerweg-Arm auf, an dem ein zweiarmiger Verstellhebel angelenkt ist. Dessen oberes Ende ist mit dem rückwärtigen Ende des Schubkolbenmotors gelenkig verbunden, während das untere Ende in zwei verschiedene Schwenkstellungen an dem Leerweg-Arm festlegbar ist. Die weiter zurückliegende Befestigungsstelle des unteren Endes des Verstellhebels hält den Schubkolbenmotor relativ zum Hauptrahmen in einer vorderen, dem normalen Arbeiten des Pfluges zugeordneten Stellung. Zum Anpflügen muss der Verstellhebel umgestellt werden, was entsprechende Handgriffe erfordert. Die Umstellung ist auch deshalb nicht einfach, weil in jeder Stellung die Verstelleinrichtung unter Vorspannkräften steht, welche das Lösen der Verriegelung und das erneute Verriegeln des Verstellhebels gleichermassen erschweren. Durch die Befestigung des unteren Endes des Verstellhebels in der vorderen Stellung am Leerweg-Hebel wird das rückwärtige Ende des Schubkolbenmotors gegenüber dem Hauptrahmen nach rückwärts versetzt. Dadurch kann der Hauptrahmen gegenüber dem beim Anpflügen auf der Ackeroberfläche aufsitzenden vorderen Furchenlaufrad weiter abgesenkt werden. Diese weitere Absenkbewegung wird begrenzt durch eine gesonderte einstellbare Anschlageinrichtung. Dank des Leerweg-Armes kann dabei der Schubkolbenmotor die Einfahrbewegung seiner Kolbenstange auch dann fortsetzen, wenn der Hauptrahmen am Nachfolgen durch die Anschlageinrichtung gehindert ist.

Es ist Aufgabe der Erfindung einen von einem Ackerschlepper nachgezogenen Pflug mit den Merkmalen des Oberbegriffs des Anspruchs 1 so weiterzubilden, dass diese Probleme vermieden werden und eine wesentlich einfachere und bequemere Umstellung der Verstelleinrichtung möglich wird.

Diese Aufgabe wird mit den Merkmalen des kennzeichnenden Teils des Anspruchs 1 gelöst.

Aufgrund dieser Ausbildung ist einmal das umstellbare bzw. einstellbare Glied am Hauptrahmen direkt gelagert. Eine Leerweg-Einrichtung in der Verbindung zwischen Schubkolbenmotor und Hauptrahmen ist nicht erforderlich. Weiterhin wird das einstellbare Glied am Hauptrahmen automatisch verstellt, und zwar in Abhängigkeit von der Einfahrbewegung des zugeordneten Schubkolbenmotors und unabhängig von der gewünschten Einstellung des Furchenlaufrades. Diese Ausbildung ermöglicht es, mit nur einem einzigen Schubkolbenmotor zwei unterschiedliche Stellungen des Furchenlaufrades zu verwirklichen, ohne dass es dazu einer besonderen Anschlagvorrichtung bedarf. Ausserdem wird dabei gewährleistet, dass der Schubkolbenmotor in jedem Fall gleiche Hubwege unabhängig von der jeweiligen Ausgangslage des Furchenlaufrades zurücklegt.

Die Anordnung nach der Erfindung ist somit wesentlich einfacher, da sie mit wesentlich weniger Teilen auskommt, wesentlich weniger Einstellschritte erfordert und daher in ihrer Umstellung ausserordentlich einfach zu bedienen ist. Beide stabilen Stellungen, die dem Anpflügen bzw. dem normalen Pflügen entsprechen, sind allein durch die mechanische Ausbildung der wenigen Teile der Verstelleinrichtung bestimmt. Die Verriegelung des umstellbaren Gliedes ist für die Aufrechterhaltung jeder der beiden stabilen Lagen an sich nicht unbedingt erforderlich, sondern stellt lediglich eine zusätzliche Sicherheitsmassnahme dar. Das Verriegeln ist dabei wesentlich einfacher, da die stabilen Lagen durch die Formgebung der Teile automatisch vorbestimmt ist und die Einrichtung nicht unter Vorspannkräften steht und daher durch den Fahrer leicht betätigt werden kann.

Vorteilhafte Weiterbildungen des Gegenstandes nach der Erfindung bieten die Merkmale der Ansprüche 2 bis 4.

Die Erfindung wird nachfolgend anhand schematischer Zeichnungen an einem Ausführungsbeispiel näher erläutert.

Es zeigen:

Figur 1 eine Draufsicht auf einen Pflug gemäss der Erfindung.

Figur 2 in grösserem Massstabe und perspektivischer Ansicht die Stützvorrichtung für das Furchenlaufrad und den zugehörigen Stellmotor.

Figur 3 in vereinfachter Darstellung und verkleinertem Massstabe die Beziehung zwischen dem Pflugrahmen und dem Furchenlaufrad bei Transportstellung.

Figur 4 in gleicher Darstellung wie Fig. 3 die Beziehung beim Anpflügen.

Figur 5 in ähnlicher Darstellung wie Fig. 4 die relative Beziehung bei der normalen Arbeitsstellung.

Figur 6 eine schematische Darstellung des Stützgestänges und des hydraulischen Motors zum Verstellen des Furchenlaufrades in der Transportstellung.

Figur 7 in ähnlicher Darstellung wie Fig. 6 die relative Lage der Teile in der Anpflügstellung und

Figur 8 in ähnlicher Darstellung wie Fig. 6 und 7 die relative Lage der Teile in der normalen Arbeitsstellung.

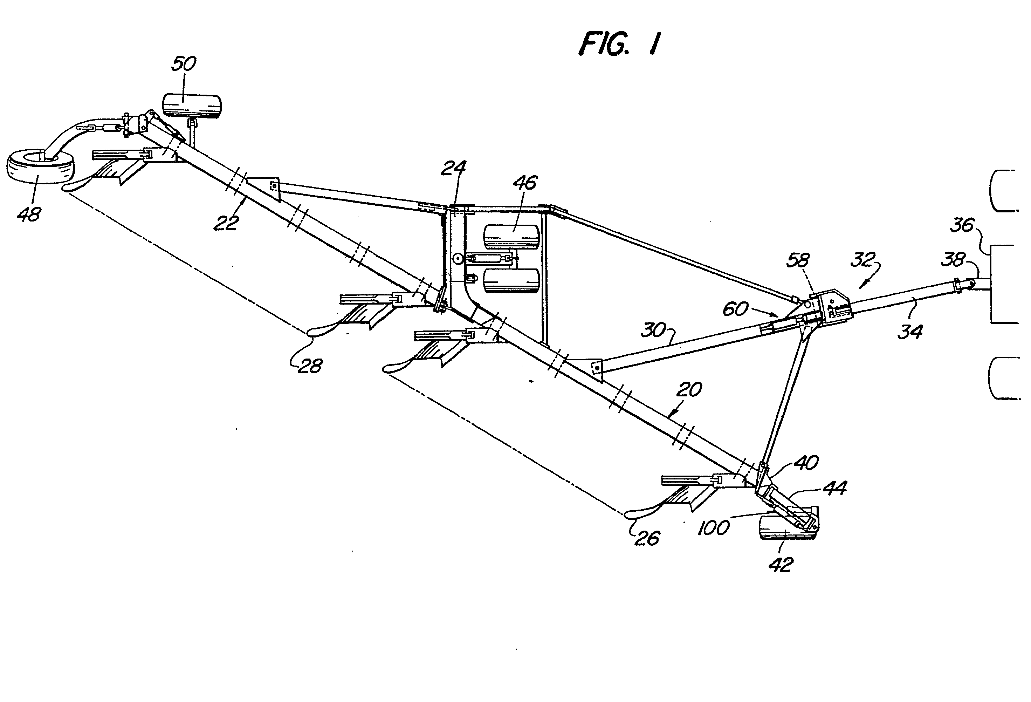

Aus Fig. 1 ist ein Tandempflug mit einem vorderen Hauptrahmen und einem gegenüber diesem zurückliegenden Hauptrahmen 22, die um eine im wesentlichen quer verlaufende Achse im Bereich 24 gelenkig miteinander verbunden und in ihrer Lage schräg zur Fahrtrichtung geneigt sind.

Der vordere Hauptrahmen 20 weist eine Reihe von typischen Pflugkörpern 26 auf, von denen einige zur Vereinfachung der Darstellung weggelassen sind. Das gleiche gilt für die Pflugkörper 28 des hinteren Hauptrahmens 22. Der vordere Hauptrahmen 20 ist starr mit einer sich nach vorne erstreckenden Zugstange 30 verbunden, wobei die starre Verbindung zumindestens bezüglich relativer vertikaler Bewegungen vorliegen soll. Die Zugstange wird an ihrem vorderen Ende von einer Zugverbindungseinrichtung 32 unterstützt, die ein starres Verbindungsglied 34 umfasst, welches mit dem Anschlussglied 38 des Ackerschleppers 36 verbunden und von diesem unterstützt ist. Für die Zugverbindungseinrichtung 32 ist Patentschutz in der europäischen Patentanmeldung Nr. 84 115 705.0 (EP-A-0145027) beansprucht. Da der Hauptrahmen 20 gegenüber der Fahrtrichtung geneigt ist, liegt das vordere rechte Ende 40 rechts und vor dem linken vorderen Ende, welches durch die Zugstange repräsentiert wird. Das vordere rechte Ende des Hauptrahmens 20 wird durch ein Furchenlaufrad 42 abgestützt, und zwar über ein Stützgestänge 44. Das zurückliegende Ende des Hauptrahmens 20 ebenso wie das vordere Ende des rückwärtigen Hauptrahmens 22 werden durch ein mit Rädern versehenes Drehgestell 46 am Boden abgestützt, während das rückwärtige Ende des rückwärtigen Rahmens typischerweise von einem weiteren Furchenlaufrad 48 und einem Fühlrad 50 unterstützt ist.

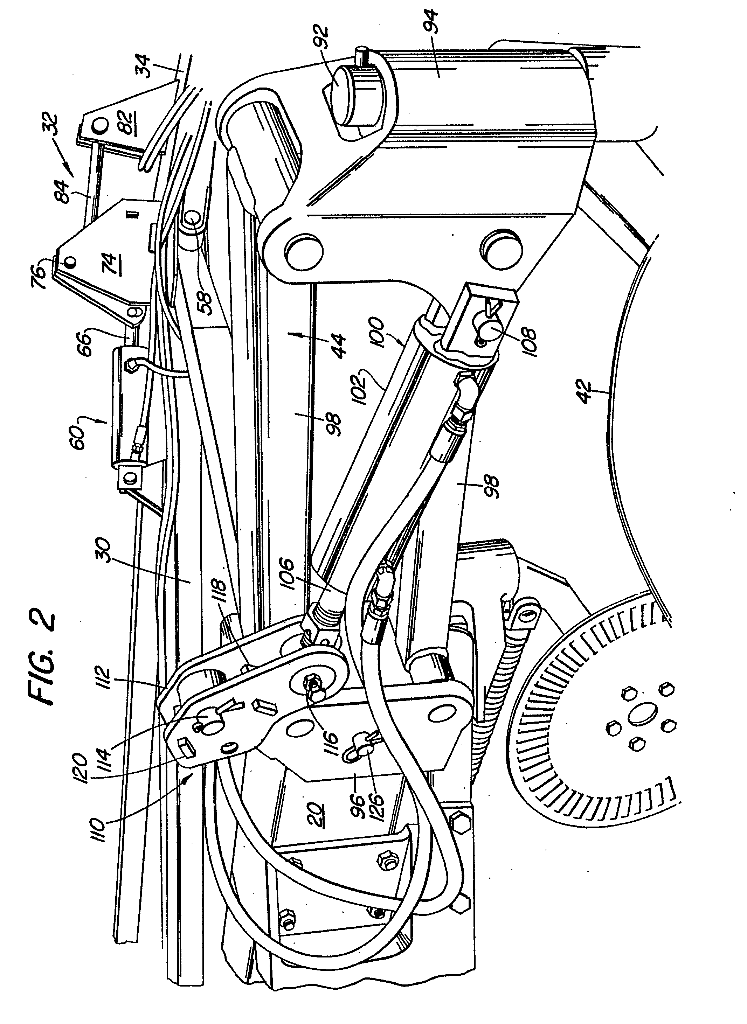

Das rechte vordere Ende des Hauptrahmens 20 auf dem Furchenlaufrad 42 wird mit Hilfe des Stützgestänges 44 abgestützt. Die Figuren 2 bis 8 zeigen am besten Einzelheiten der Gestänge, der Hubeinrichtung und der übrigen Teile.

Das Furchenlaufrad umfasst eine nicht gezeigte Achse, die starr mit einer aufrechten Welle 92 verbunden ist, die um eine senkrechte Achse in einem Lagergehäuse 94 schwenkbar ist. Das vordere Ende des Hauptrahmens 20 trägt starr einen Halter 96. Das Stützgestänge 44 weist im dargestellten Beispiel zwei parallele Lenker 98 auf, die mit ihren entgegengesetzten Enden jeweils an dem Lagergehäuse 94 bzw. dem Halter 96 des Hauptrahmens angelenkt sind. Ein doppelt wirkender hydraulischer Motor in Form eines Hubkolbenmotors 100 liegt zwischen dem Lagergehäuse und dem Halter 96 und parallel zu dem Stützgestänge, so dass eine relative Hubbewegung und Senkbewegung zwischen Hauptrahmen und Furchenlaufrad ausgeführt werden kann. Wie weiter unten gezeigt wird, wird diese Hub- und Senkbewegung des Hauptrahmens über das Furchenlaufrad koordiniert mit der entsprechenden Hub- und Senkbewegung durch die Zugverbindung 32.

Der hydraulische Motor 100 umfasst einen Zylinder 102, einen Kolben und eine Kolbenstange 106. Das geschlossene Ende des Zylinders weist eine Gelenkverbindung 108 mit einem Träger 94 für das Furchenlaufrad auf. Die Kolbenstange erstreckt sich nach oben und nach rückwärts zu einer Verbindungseinrichtung 110 mit dem Halter 96. Diese Teile wirken so zusammen, dass der Motor 100 stets die gleiche Hublänge aufweisen kann, unabhängig davon, ob das Furchenlaufrad sich in der normalen Arbeitsstellung der in der Anpflügstellung befindet. Im vorliegenden Beispiel wird der Motor 100 ausgefahren, um den Rahmen anzuheben und eingefahren, um ihn abzusenken. Auch hier können die Teile jedoch umgekehrt verbunden sein, so dass auch die umgekehrten Funktionen erreicht werden können.

Die Mittel, mit denen das genannte Ergebnis erzielt wird, umfassen eine bistabile Einrichtung. Diese weist als bistabiles Glied einen Arm 112 auf, der an dem Halter 96 um einen Querzapfen 114 schwenkbar ist. Zur Vereinfachung und Verdeutlichung wird angenommen, dass der Arm sich von vorne nach hinten und umgekehrt bewegt. Diese Ausdrücke sind hier jedoch nur relativ zu verstehen und nicht im begrenzten Sinne.

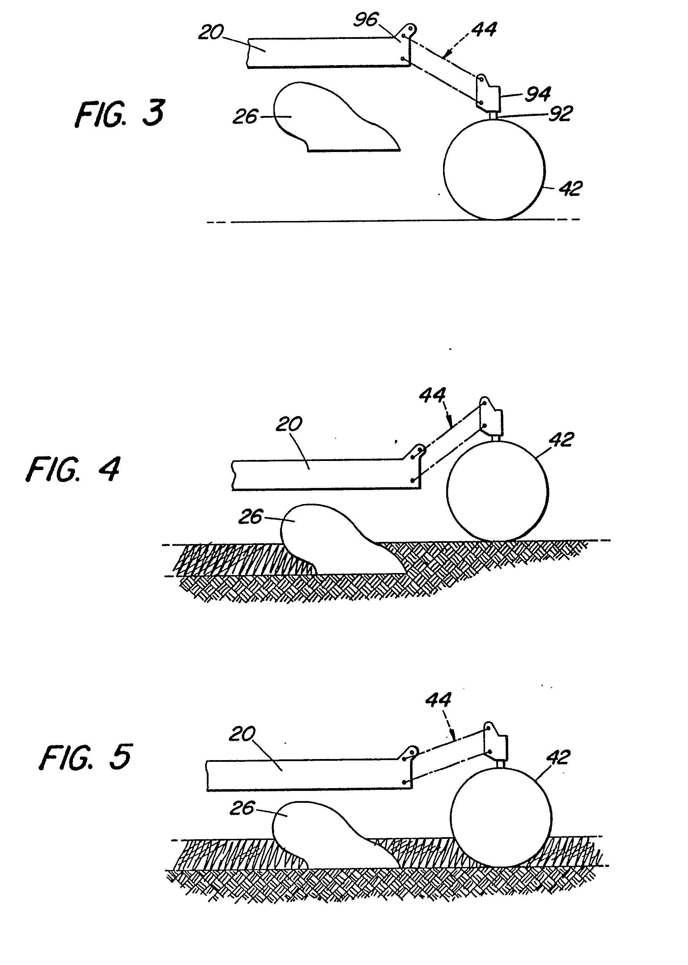

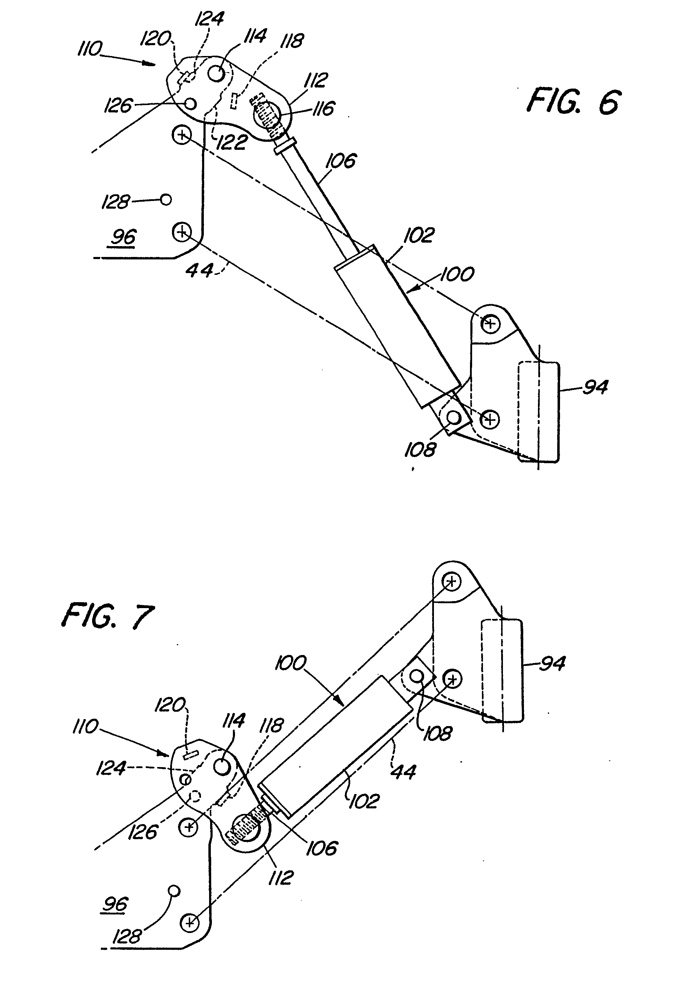

Der Arm erstreckt sich im wesentlichen nach unten. Sein freies Ende ist mit dem Ende der Kolbenstange 106 über einen Querzapfen 116 verbunden, so dass das Ausfahren und Einfahren des Motors den Arm verschwenkt. Das Verschwenken des Armes wird bezüglich des Winkelausmasses zwischen zwei Stellungen auf entgegengesetzten Seiten einer geraden Linie begrenzt, die zwischen dem Zylinderverankerungsstift 108 und der Schwenkachse 114 des Armes gezogen wird. Eine kontrollierte Bewegung des Armes in diesen beiden Phasen wird erreicht durch vordere und rückwärtige Anschläge 118 und 120. Diese sind an dem Arm vorgesehen und können mit entsprechenden vorderen und rückwärtigen Abschnitten oder Vorsprüngen 122 und 124 des Halters 96 nach Fig. 6 zusammenwirken. Die Figuren 3 und 6 zeigen die Komponenten in der voll angehobenen Transportstellung des Pfluges. Der Motor für das Furchenlaufrad ist ausgefahren. Der Arm ist nach vorne in eine Stellung in Anlage an dem rückwärtigen Anschlag verschwenkt. Dadurch wird eine weitere Verschwenkung im Gegenuhrzeigersinne verhindert. Ein Stift 126 kann durch in Fluchtung stehende Öffnungen (nicht mit Bezugszeichen versehen) in den Arm und in den Halter gesteckt werden, um den Arm in dieser Stellung festzulegen. Wenn der Stift 126 nicht benötigt wird, kann er in einer Nichtgebrauchsstellung in die Öffnung 128 eingesetzt werden.

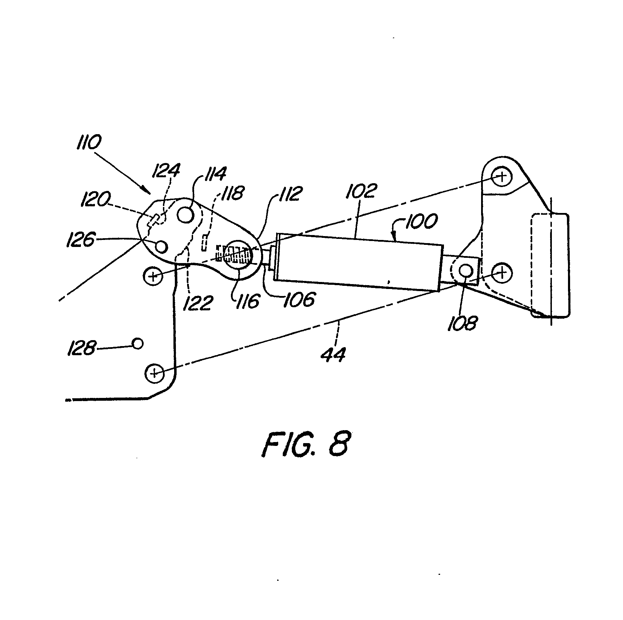

Wenn der Pflug von der Transportstellung in die normale Arbeitsstellung nach Figuren 5 und 8 abgesenkt werden soll, und wenn angenommen wird, dass das Furchenlaufrad 42 in einer Furche läuft, wird der Stift 126 an Ort und Stelle belassen und der Motor 100 eingefahren. Wenn jedoch eine Furche nicht vorhanden ist, wie dies beim Anpflügen eines Ackers der Fall ist, wird der Stift 126 herausgenommen und der Motor zurückgezogen. Da der Pflug um ein grösseres Ausmass gegenüber dem Furchenlaufrad abgesenkt werden muss, wenn sich das Furchenlaufrad nicht in einer Furche befindet, kann der Arm über seine Mittelstellung umschlagen, bis die Anschlagelemente 118 und 122 zur gegenseitigen Anlage kommen (Fig. 7). Dies liegt daran, dass das Furchenlaufrad auf der Oberseite des Ackers läuft und sich damit in einer höheren Stellung befindet als beim Laufen in einer Furche. Wenn es umgekehrt wünschenswert ist, den Arm 112 in die Stellung für das normale Pflügen zu bewegen, wird der Pflug bis auf den Boden abgesenkt, bis der zugehörige hydraulische Motor ein über die Mittelstellung Hinausschwenken des Armes bis zur Anlage an die Anschlagelemente 120, 124 ermöglicht. Danach wird der Stift 126 in die Riegelstellung in den oberen Öffnungen von Arm und Halter eingesetzt.

Die Wirkungsweise der bistabilen Einrichtung kann vielleicht besser bei der Beschreibung der Absenkung des Pfluges aus der Stellung nach Fig. 6 in die Stellung nach Fig. 7 verstanden werden. Zunächst wird der Stift 126 aus der Verriegelungsstellung genommen und in die Öffnung 128 eingesetzt. Wenn der zugehörige Arbeitsmotor eingefahren wird, erfolgt das Schwenken des Furchenlaufrades im wesentlichen um den Stift 116, bis die Linie durch die Punkte 108, 116, 114 erreicht wird. Dies ist die Totpunktlinie. Da die relative Bewegung zwischen dem Pflugrahmen und dem Furchenlaufrad fortgesetzt wird, schnappt der Arm 112 über die Totpunktlinie im Uhrzeigersinne hinaus. Eine Rückkehr zu der angehobenen Stellung von der Anpflügarbeitsstellung ist bei unveränderter Stellung des Armes möglich. Dazu wird der hydraulische Motor 100 ausgefahren. Die Lage der Wirklinie des hydraulischen Motors einerseits und das Gewicht des Pfluges, der dabei angehoben wird, sorgen dafür, dass der Arm 112 die Stellung nach Fig. 7 beibehält. Durch die Neigung der Wirklinie des hydraulischen Motors 100 gegenüber der Lage des Stützgestänges 44 führt dazu, dass beim Ausfahren des hydraulischen Motors 100 das linke Ende des hydraulischen Motors in Fig. 7 gegenüber dem rechten Ende angehoben wird. Diese Bewegung setzt sich fort, bis die Wirklinie des hydraulischen Motors 100 die Schwenkachse des Querzapfens 114 in Richtung nach oben passiert. In diesem Augenblick schwenkt der Arm 112 in die Stellung nach Fig. 6 und bleibt in dieser Stellung, bis der hydraulische Motor 100 bis in die Transportstellung des Pfluges ausgefahren ist. Entsprechendes gilt auch für eine Rückkehr des Pfluges in die angehobene Transportstellung von der normalen Arbeitsstellung aus, wie in Fig. 8 gezeigt ist. In jedem Fall ist die angehobene Stellung des Pfluges bei einer konstanten Höhe unabhängig davon, ob er aus der Anpflügstellung oder aus der normalen Arbeitsstellung aus angehoben wird. Die bistabile Einrichtung sorgt für zwei unterschiedliche relative Stellungen des Furchenlaufrades.

Um überzugehen von der Anpflügstellung in die normale Arbeitsstellung wird der Pflug in eine Stellung gebracht, in der das Furchenlaufrad in eine Furche eintreten kann. Der Pflug liegt dabei noch auf dem ungepflügten Acker auf, während das Furchenlaufrad buchstäblich in der Luft hängt. In diesem Augenblick wird der Ackerschlepper angehalten und der betreffende hydraulische Motor eingefahren, so dass der Pflug in den Boden eindringt. Ein weiteres Einfahren des Motors führt zum Anheben des Rades vom Furchenboden. Dadurch wird der Arm 112 im Gegenuhrzeigersinne verschwenkt, bis die Anschläge 120, 124 wirksam werden (Fig. 8). Der Stift 126 wird in seine Verriegelungsstellung (oberes Loch) eingesetzt, um diese Stellung für den normalen Arbeitsvorgang aufrechtzuerhalten. Wenn der Ackerschlepper vorwärts gefahren wird, treten die Pflugkörper in den Boden und das Furchenlaufrad läuft in Furche.

Weiter oben ist auf das Merkmal hingewiesen, wonach die beiden hydraulischen Motore in Reihe geschaltet sind. Diese Reihenschaltung umfasst weiterhin eine Einrichtung, um den Gleichlauf der zugehörigen Kolben wieder herzustellen. Obwohl Fig. 1 eine hydraulische Steuereinrichtung auch für das Laufraddrehgestell, das hintere Furchenlaufrad und das Höhenfühlrad zeigt, sind diese Merkmale nicht von besonderer Bedeutung und es wird von der Beschreibung Abstand genommen. Auch sind zur Vereinfachung und Deutlichkeit die Leitungen für die beiden Motore in Fig. 1 nicht eingezeichnet.

Es ist ersichtlich, dass die Arbeitsweise der Motoren für die Zugverbindung und für das Furchenlaufrad im wesentlichen synchron erfolgt, mit dem Ergebnis, dass die vorderen Enden des Pfluges während des Anhebens und Absenkens ihre Raumlage beibehalten. Die Steuereinrichtung für das Furchenlaufrad insb. in Verbindung mit dem bistabilen Arm 112 liefert die notwendige Kompensation bezüglich unterschiedlicher Funktionen beim Absenken in eine Arbeitsstellung, in der bereits eine Furche vorliegt und beim Absenken in die Arbeitsstellung, wenn das Furchenlaufrad auf der Oberseite des Ackers laufen muss, wie dies beim Anpflügen eines Feldes der Fall ist. In jedem Fall ist der Rückwärtshub des zugehörigen Motors für das Furchenlaufrad der gleiche, wodurch der Aufbau und die Betätigung des Ventils V wesentlich erleichtert werden.

**Patentansprüche**

1. Von einem Ackerschlepper nachgezogener Pflug mit einem Hauptrahmen (20), einem Furchenlaufrad (42), einem Furchenlaufradträger (94) und einem in einer vertikalen Ebene schwenkbaren Gestänge (44), mittels dem der Hauptrahmen (20) auf dem Furchenlaufradträger (94) zur vertikalen relativen Verstellung von Furchenlaufrad (42) gegenüber Hauptrahmen (20) zwischen einer Transportstellung und einer normalen Arbeitsstellung abgestützt ist, wobei der Pflug eine Verstelleinrichtung (110) mit einem in zwei verschiedene Stellungen umstellbaren Glied (112) aufweist, das das Furchenlaufrad (42) in der einen Stellung in der normalen Arbeitsstellung und in der anderen Stellung in der Anpflugstellung hält, und der Pflug einen doppelt wirkenden, hydraulischen Schubkolbenmotor (100) zum Heben und Senken des Furchenlaufrades (42) aufweist, der einenends an das einstellbare Glied (112) angelenkt ist, dadurch gekennzeichnet, dass der Schubkolbenmotor (100) andernends an dem Furchenlaufradträger (94) angelenkt ist und das einstellbare Glied (112) am Hauptrahmen (20) so angelenkt ist, dass das Glied (112) durch die Einfahrbewegung der Kolbenstange (106) des Schubkolbenmotors (100) automatisch betätigt wird, so dass der hydraulische Schubkolbenmotor (100) für die Umstellung aus der Transportstellung in die normale Arbeits- oder in die Anpflugstellung gleiche Hublänge aufweist.

2. Pflug nach Anspruch 1, dadurch gekennzeichnet, dass das einstellbare Glied (112) als Übertotpunkt-Schwenkglied ausgebildet ist, welches so angeordnet ist, dass es in Abhängigkeit von der Einfahrbewegung der Kolbenstange (106) des Schubkolbenmotors (100) von der der Transportstellung zugeordneten stabilen Stellung auf der einen Seite des Totpunktes automatisch in die der Anpflugstellung zugeordnete stabile Stellung auf der anderen Seite des Totpunktes in die Anpflugstellung umgesteuert wird.

3. Pflug nach Anspruch 1, dadurch gekennzeichnet, dass das einstellbare Glied (112) einen Arm aufweist, der am Hauptrahmen (20) um eine Achse quer zur Ausfahrrichtung der Kolbenstange (106) des Schubkolbenmotors (100) über einen Sektor schwenkbar ist, der durch im Winkelabstand angeordnete Anschläge (118, 120) am Hauptrahmen (20) bestimmt ist.

4. Pflug nach Anspruch 1, dadurch gekennzeichnet, dass dem einstellbaren Glied (112) der Verstelleinrichtung (110) ein mit dem Hauptrahmen (20) zusammenwirkendes Sperrglied (126) zur vorübergehenden Festlegung des einstellbaren Gliedes (112) in seiner, der normalen Arbeitsstellung entsprechenden, stabilen Stellung zugeordnet ist.

**Claims**

1. A tractor-drawn plough comprising a main frame (20), a furrow wheel (42), a furrow wheel carrier (94) and a linkage (44) which is pivotable in a vertical plane and by means of which the main frame (20) is supported on the furrow wheel carrier (94) for vertical relative displacement of the furrow wheel (42) relative to the main frame (20) between a transportation position and a normal operating position, wherein the plough has a displacement means (110) having a member (112) which can be moved into two different positions and which holds the furrow wheel (42) in the one position in the normal operating position and in the other position in the starting-ploughing position and the plough has a double-acting hydraulic linear piston motor (100) for raising and lowering the furrow wheel (42), which motor is connected at one end to the adjustable member (112), characterised in that the linear piston motor (100) is connected at the other end to the furrow wheel carrier (94) and the adjustable member (112) is so connected to the main frame (20) that the member (112) is automatically actuated by the retraction movement of the piston rod (106) of the linear piston motor (100) so that the hydraulic linear piston motor (100) has equal stroke lengths for movement from the transportation position into the normal operating position or into the starting-ploughing position.

2. A plough according to claim 1 characterised in that the adjustable member (112) is in the form of an over-dead centre pivotal member which is so arranged that it is automatically moved, in dependence on the retraction movement of the piston rod (106) of the linear piston motor (100) from the stable position associated with the transportation position on one side of the dead centre point into the stable position associated with the starting-ploughing position on the other side of the dead-centre point, into the starting-ploughing position.

3. A plough according to claim 1 characterised in that the adjustable member (112) has an arm which is pivotable on the main frame (20) about an axis transversely with respect to the direction of extension of the piston rod (106) of the linear piston motor (100) over a sector which is defined by abutments (118, 120) arranged at an angular spacing, on the main frame (20).

4. A plough according to claim 1 characterised in that associated with the adjustable member (112) of the displacement means (110) is a locking member (126) which co-operates with the main frame (20), for temporarily fixing the adjustable member (112) in its stable position corresponding to the normal operating position.

**Revendications**

1. Charrue tractée par un tracteur agricole, comportant un châssis principal (20), une roue de sillon (42), un support de roue de sillon (94) et un système de leviers (44) pouvant pivoter dans le plan vertical, au moyen duquel le châssis principal (20) prend appui sur le support de roue de sillon (94) en vue d'un déplacement vertical relatif de la roue de sillon (42) par rapport au châssis principal (20) entre une position de transport et une position de travail normale, la charrue comprenant un dispositif de déplacement (110) muni d'un organe (112) déplaçable entre deux positions différentes, qui maintient la roue de sillon (42) dans une position dans la position de travail normale et dans l'autre position dans la position de début de labour, la charrue comportant un vérin hydraulique à double effet (100) pour le relevage et l'abaissement de la roue de labour (42), ce vérin étant articulé par une extrémité à l'organe réglable (112), caractérisée en ce que le vérin (100) est, par son autre extrémité, articulé sur le support de roue de sillon (94) et en ce que l'organe réglable (112) est articulé sur le châssis principal (20) de façon telle que l'organe (112) soit actionné automatiquement par le mouvement de rentrée de la tige de piston (106) du vérin (100), de sorte que le vérin hydraulique présente, pour le passage depuis la position de transport 100 dans la position de travail normale ou dans la position de début de labour, la même longueur de course.

9 **0 068 381** 10

2. Charrue suivant la revendication 1, caractérisée en ce que l'organe réglable (112) se présente sous la forme d'un organe pivotant à dépassement de point mort, qui est disposé de façon telle qu'il soit amené par commande, en fonction du mouvement de rentrée de la tige de piston (106) du vérin (100), de la position stable associée à la position de transport située d'un côté du point mort, de façon automatique dans l'autre position stable associée à la position de début de labour située de l'autre côté du point mort dans la position de début de labour.

3. Charrue suivant la revendication 1, caractérisée en ce que l'organe réglable (112) comprend un bras qui peut pivoter sur le châssis principal (20) autour d'un axe transversal à la direction de sortie de la tige de piston (106) du vérin (100) sur un secteur qui est déterminé par des butées (118, 120) prévues sur le châssis principal (20) selon un écartement angulaire.

4. Charrue suivant la revendication 1, caractérisée en ce qu'il est prévu, en combinaison avec l'organe réglable (112) du dispositif de déplacement (110), un organe de verrouillage (126) coopérant avec le châssis principal (20) pour l'immobilisation momentanée de l'organe réglable (112) dans sa position stable correspondant à la position de travail normale.

FIG. 1

FIG. 2

FIG. 3

FIG. 4

FIG. 5

0 068 381

FIG. 6

FIG. 7

13

FIG. 8